(19) Europäisches Patentamt

European Patent Office

Office européen des brevets

(11) **EP 2 369 176 A1**

(12) **EUROPEAN PATENT APPLICATION**

(43) Date of publication:
**28.09.2011 Bulletin 2011/39**

(51) Int Cl.:
***F03D 7/02*** *(2006.01)*

(21) Application number: **10154470.8**

(22) Date of filing: **24.02.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS** | (71) Applicant: **Siemens Aktiengesellschaft**<br>**80333 München (DE)**<br><br>(72) Inventor: **Frydendal, Ib**<br>**6683, Føvling (DK)** |

(54) **Wind turbine and method for measuring the pitch angle of a wind turbine rotor blade**

(57) A method for measuring the pitch angle of a wind turbine rotor blade (5) is provided, wherein at least one image of at least part of the rotor blade (5) is acquired by a camera (37) from a defined position and the pitch angle is calculated by means of data from the at least one image.

FIG 7

EP 2 369 176 A1

Printed by Jouve, 75001 PARIS (FR)

## Description

The present invention relates to a method for measuring the pitch angle of a wind turbine rotor blade. It further relates to a wind turbine.

The production and installation of wind turbine rotors including blades, hubs, and pitch systems include several operations with the potential of tolerances being exceeded. A wind turbine running with unbalances in pitch angle of the blades (also referred to as aerodynamic unbalance) may possible be overloaded on certain components for example yaw system, main shaft, main shaft bearings, blade roots, and pitch system. In addition the power production may not be optimal.

The pitch adjustment is depending on the position of the zero-degree indicator mounted in the blade from the factory. However, if the zero-bar is not mounted correctly, or if it has been damaged, this does not provide for checking the pitch angle adjustment.

If the aerodynamic unbalances of rotors are small the turbines have been able to withstand the additional loads and a potential reduced power production may not have been discovered. Larger unbalances may be detected as oscillations in generator revolution per minute (RPM), by accelerations in the nacelle, or by excessive loads on the yaw system and the main bearings.

It is a first objective of the present invention to provide an advantageous method for measuring the pitch angle of a wind turbine rotor blade. It is a second objective of the present invention to provide an advantageous wind turbine.

The first objective is solved by a method for measuring the pitch angle of a wind turbine rotor blade as claimed in claim 1. The second objective is solved by a wind turbine as claimed in claim 12. The depending claims define further developments of the invention. All mentioned features in the present description are advantageous alone and in any combination with each other.

The inventive method for measuring the pitch angle of a wind turbine rotor blade comprises the steps of acquiring at least one image, preferably at least 3 images, of at least part of the rotor blade by a camera from a defined position and calculating the pitch angle by means of data from the at least one image. The pitch angle defines a rotation of the rotor blade about the centre line of the rotor blade.

For example, the image can be analyzed by use of an interactive program, which calculates the pitch angle. The method is based on an estimation of the angle at which the turbine rotor blade is viewed. Hence, the camera position is essential. Generally, the measurement can be performed by service personal. The pitch angle measurement, especially the absolute pitch angle measurement provided by the inventive method, is based on interactive vision.

The inventive method has the advantage, that only a few tools are necessary to measure the pitch angle, for example, only a camera and an analyzing unit, which may be a computer. Moreover, by the invention it is possible to detect if the adjustment of the pitch angle is not correct. This helps to ensure that the wind turbine produces the specified rated power and that oscillations and loads of the wind turbine components are reduced. Furthermore, the invention can be used without any kind of disassembly of components of the wind turbine.

Preferably, the image may be acquired when the rotor blade is mounted onto the wind turbine. The image can be acquired when the rotor rotates or when the rotor is stopped. This means that the image can be acquired with the turbine in operation or with the turbine stopped. It may be beneficial to acquire the image with the turbine stopped, in order to make the adjustment of the turbine pitch and re-measure to verify that the pitch angle is correct.

The wind turbine can comprise a tower and the image can be acquired by a camera which is positioned at a horizontal distance between 1 m and 3 m, preferably 2 m, from the tower. Positioning the camera close to the tower, for example at a horizontal distance of only a few meters from the tower makes it possible to use the inventive method offshore, especially for measuring the pitch angle of a rotor blade of an offshore wind turbine.

Preferably, the wind turbine may comprise a hub and the image can be acquired by a camera which is positioned vertical below the hub and/or in upwind direction. Advantageously the camera may be positioned in exact upwind direction and exactly vertical under the hub.

The image of the rotor blade can be analyzed by an image analyzing program. For example, the image of the rotor blade may be transferred to an analyzing unit, for instance to a computer. Then the pitch angle of the blade can be adjusted, if necessary. At least one further image of the rotor blade may be acquired, if necessary, and the at least one further image can be analyzed by the image analyzing program. This ensures, that the pitch angle of the rotor blade has been adjusted correctly.

Advantageously the image of the rotor blade can be acquired when the rotor blade is in a horizontal position, for example in a specific azimuth angle, preferably between 267° and 273°, for instance at 270°.

The rotor blade may comprise a blade root and a trailing edge with a shoulder. Preferably, the image is acquired from the shoulder to the blade root. Moreover, the rotor blade may comprise a trailing edge with a shoulder, a pressure side and a suction side. The pitch angle can be calculated based on a determination of the position of the trailing edge relative to the pressure side and the suction side at the position of the shoulder. Furthermore, the pitch angle can be calculated using the geometry of the rotor blade.

Advantageously, a digital camera is used. Preferably, the camera provides an image resolution of at least 9 Mpixels, advantageously at least 10 Mpixels.

If the wind turbine is in operation and the one or more blades of the wind turbine are rotating during the absolute pitch measurement, then a high speed camera is normally preferred to ensure getting at least one useable picture of the blades in the preferred azimuth position of 270° +/-3°. Normally such a high speed camera is able to provide from e.g. 25 images/second up to more than 10.000 images/second. The camera should preferably provide at least 60 images/second, depending on the rotational speed of the rotor. By using a high speed camera it is possible to get images of more than one blade, e.g. three blades, in only one revolution of the blades. The camera and in particular the high speed camera may preferably be a digital camera.

The camera might be detachable attached to the tower or the foundation of the tower of the wind turbine and it might be connected to a SCADA monitoring system comprising a world wide web or similar network connection and/or the camera might be connected to a local computer in the wind turbine. The SCADA monitoring system and/or the computer might comprise an image analyzing tool or program for analyzing the images from the camera. By using the SCADA monitoring system which might be connected to a turbine controller of the wind turbine, the image analyzing can be done remotely, which might be quite useful on offshore wind turbine sites.

It is also useful to use the remote SCADA monitoring system when several wind turbines are being erected at the same time on different locations, e.g. a new wind park in Denmark and a new wind park in Scotland, whereby the same technicians are able to monitor all the results of the image analyzing program for each new erected wind turbine without being forced to travel to each location or site.

For example, the rotor blade may be positioned in an azimuth angle between 267° and 273°, preferably 270°. Then the rotor blade may be pitched to 0°. At least one image of the rotor blade may be acquired from a defined position below the blade by a camera. Then the pitch angle can be calculated based on analyzed data from the image.

Alternatively, the rotor blade is rotating. In this case the rotor blade may be pitched to 0°. At least one image of the rotor blade can be acquired from a defined positioned below the blade by a camera. Then the pitch angle can be calculated based on analyzed data from the image. For measuring the pitch angle of a rotor blade when the wind turbine is in operation and the blades are rotating, preferably the high speed camera may be used. The high speed camera may provide at least 60 images/second.

Generally, the image can be analyzed by an analyzing means which calculates the pitch angle. The analyzing means may comprise an interactive image processing and/or at least one image analyzing tool or program.

The inventive wind turbine comprises a tower, a hub and at least one rotor blade. A camera for acquiring images of the rotor blade is connected to the tower below the hub. Preferably, the wind turbine may comprise 2 or 3 rotor blades. The inventive wind turbine has the advantage, that the pitch angle of the rotor blade can be measured according to the previously described inventive method.

The tower may comprise a foundation and the camera may be connected to the foundation. Generally, the wind turbine may be installed offshore.

The camera, preferably a digital camera, may be detachably connected to the tower or to the foundation. Moreover, the camera may be connected to an analyzing unit which may be configured for analyzing images from the camera. For example, the analyzing unit may be configured for determining the absolute pitch angle of the rotor blade based on data from the image from the camera. Preferably, the camera is able to provide an image resolution of at least 9 Mpixels, advantageously at least 10 Mpixels. Moreover, the camera may be a high speed camera. The high speed camera may be able to provide at least 25 image/second, preferably at least 60 images/second.

The inventive wind turbine has the same advantages as the inventive method has, because the inventive method for measuring the pitch angle of the wind turbine rotor blade can be performed by means of the inventive wind turbine.

Generally, the present invention avoids additional loads and a potentially reduced power production. Moreover, oscillations in generator revolution per minute (RPM), accelerations in the nacelle, or excessive loads on the yaw system and the main bearings due to an incorrect pitch angle are reduced.

Further features, properties and advantages of the present invention will become clear from the following description of embodiments in conjunction with the accompanying drawings. All mentioned features in the embodiments are advantages alone and in any combination with each other. Any combination of features of different embodiments with each other is possible. Corresponding elements in the different embodiments are designated with the same reference numeral and will be described only once in detail to avoid repetition.

Figure 1    schematically shows a wind turbine.

Figure 2    schematically shows a rotor blade in a plan view on the plane defined by the blade's span and the blade's chord.

Figure 3    schematically shows a chord-wise cross section through the rotor blade's airfoil section.

Figure 4    schematically shows an image of part of a wind turbine rotor blade and the hub as it is acquired by means of a camera.

Figure 5    schematically shows part of the image of Figure 4.

Figure 6    schematically shows the pitch angle confidence intervals for three different rotor blades of a wind turbine.

Figure 7    schematically shows the geometry of the pitch angle measurement in a first viewing direction.

Figure 8    schematically shows the geometry of the pitch angle measurement in a second viewing direction, perpendicular to the first viewing direction.

Figure 9    schematically shows a cross section of the rotor blade at the shoulder position rotated to a pitch angle of 0°.

Figure 10   schematically shows the shoulder cross section 41 of Figure 9 and the shoulder cross section 42 which is rotated about an angle of -4,752° compared to the shoulder cross section 41 at 0,0°.

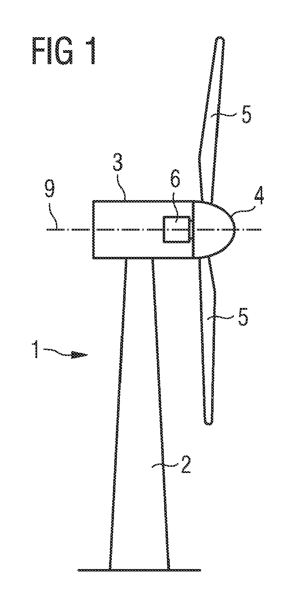

A first embodiment if the invention will now be described with reference to figure 1 to 3.

Figure 1 schematically shows a wind turbine 1. The wind turbine 1 comprises a tower 2, a nacelle 3 and a hub 4. The nacelle 3 is located on top of the tower 2. The hub 4 comprises three of wind turbine blades 5. However, the present invention shall not be limited to blades for three-bladed rotors. In fact, it may as well be implemented in other rotors, e.g. one-blade rotors, two-blade rotors or wit rotors having more than three blades. The hub 4 is mounted to the nacelle 3. Moreover, the hub 4 is pivotally mounted such that it is able to rotate about a rotation axis 9. The azimuth angle describes the rotation of the rotor blade 5 about the rotation axis 9. A generator 6 is located inside the nacelle 3.

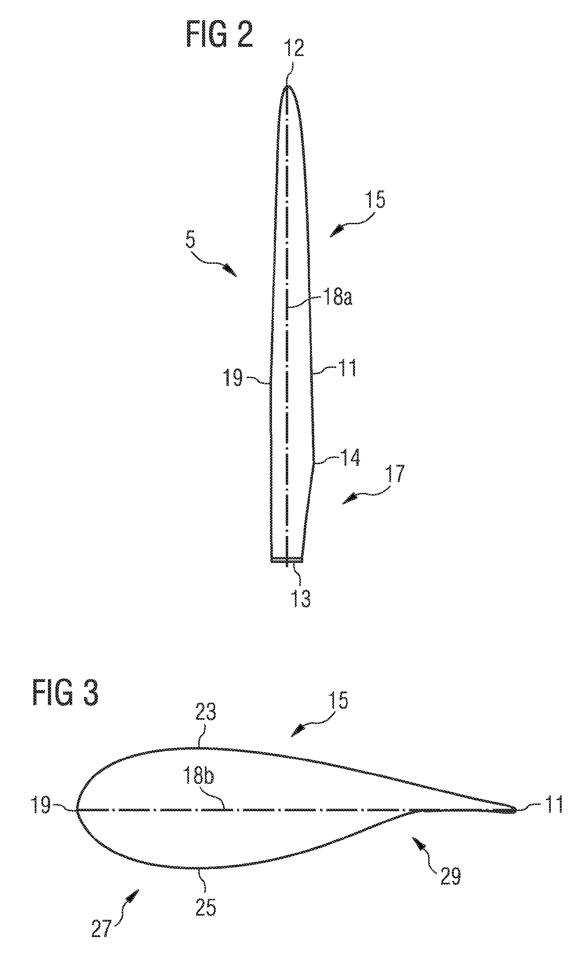

Figure 2 shows a rotor blade in a plan view on the plane defined by the blade's span 18a and the blade's chord 18b (see Figure 3). Figure 2 shows a wind turbine blade 5 as it is usually used in a three-blade rotor. The rotor blade 5 shown in Figure 2 comprises a root portion 13 with a cylindrical profile and a tip 12. The tip 12 forms the outermost part of the blade 5. The cylindrical profile of the root portion 13 serves to fix the blade to a bearing of a rotor hub 4. The rotor blade 5 further comprises a so-called shoulder 14 which is defined as the location of its maximum profile depth, i.e. the maximum chord length of the blade. Between the shoulder 14 and the tip 12 an airfoil portion 15 extends which has an aerodynamically shaped profile. Between the shoulder 14 and the cylindrical root portion 13, a transition portion 17 extends in which a transition takes place from the aerodynamic profile of the airfoil portion 15 to the cylindrical profile of the root portion 13. The pitch angle defines a rotation of the rotor blade 5 about the span 18a.

A chord-wise cross section through the rotor blade's airfoil section 15 is shown in Figure 3. The aerodynamic profile shown in Figure 3 comprises a convex suction side 23 and a less convex pressure side 25. The dash-dotted line 18b extending from the blade's leading edge 19 to its trailing edge 11 shows the chord of the profile. Although the pressure side 25 comprises a convex section 27 and a concave section 29 in Figure 3, it may also be implemented without a concave section at all as long as the suction side 23 is more convex than the pressure side 25.

The suction side 23 and the pressure side 25 in the airfoil portion 15 will also be referred to as the suction side and the pressure side of the rotor blade 5, respectively, although, strictly spoken, the cylindrical portion 13 of the blade 5 does not show a pressure or a suction side.

For performing the inventive method, first the tower 2 circumference can be measured. Then the tower-to-camera distance can be looked up in the table for the given wind turbine 1. Next, the camera 37 may be placed in the correct distance from the tower 2 in the exact upwind direction. Now, the turbine rotor can be stopped with the rotor blade 5 in azimuth angle 270° +/- 3°. Then the rotor blade 5 is pitched to 0°. Preferably, the zoom is adjusted corresponding to the blade shoulder 14 and the hub 4 fitting into the image. The hub 4 in the right side of the image, the blade shoulder 14 in the left side, and the blade 5 in horizontal position in the image. Advantageously, a suitable image resolution of e.g. approx. 10 Mpixels is used. One or more images are acquired, preferable at least 3 images. The images are transferred to a computer, where the pitch angle is calculated by means of an interactive program.

The camera 37 might be detachable attached to the tower 2 or the foundation of the tower 2 of the wind turbine 1 and it might be connected to a SCADA (Supervising Control and Data Acquisition) monitoring system comprising a world wide web or similar network connection and/or the camera might be connected to a local computer in the wind turbine 1. The SCADA monitoring system and/or the computer might comprise an image analyzing tool or program for analyzing the images from the camera. By using the SCADA monitoring system which might be connected to a turbine controller of the wind turbine, the image analyzing can be done remotely, which might be quite useful on offshore wind turbine sites.

The inventive method is performed while the turbine 1 is in operation. If the wind turbine 1 is in operation and the one or more blades 5 of the wind turbine 1 are rotating during the absolute pitch measurement then a high speed camera 37 is normally preferred to ensure to get at least one useable picture of the blades 5 in the preferred azimuth position of 270° +/- 3°. Normally such a high speed camera is able to provide from e.g. 25 images/second up to more than 10.000 images/second. The camera should preferably provide at least 60 images/second, depending on the rotational speed of the rotor. By using a high speed camera it is possible to get images of more than one blade, e.g. three blades, in only one revolution of the blades. The camera and in particular the high speed camera is preferably a digital camera.

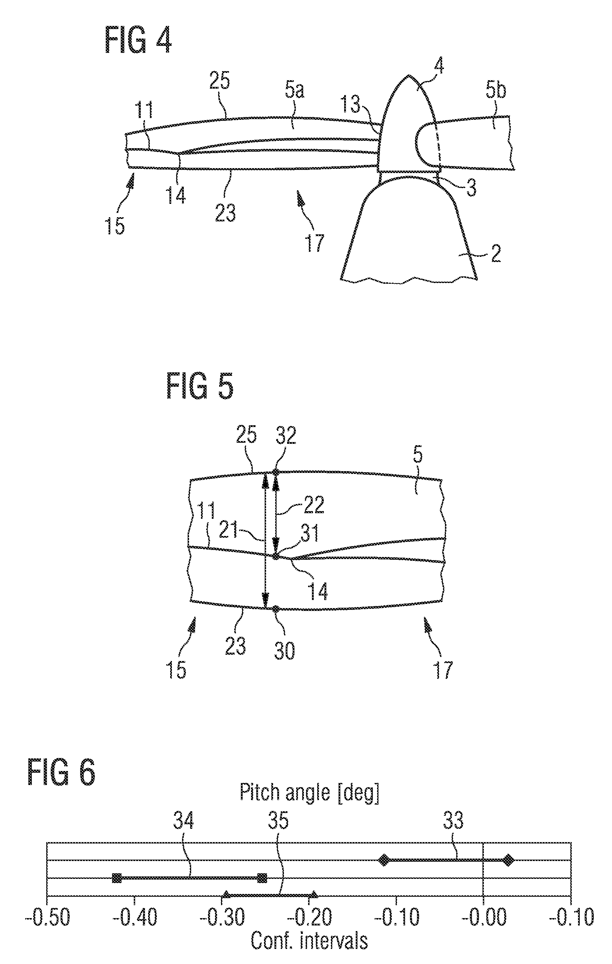

Figure 4 schematically shows an image as it is acquired by means of a camera located at or close to the tower. The image includes parts of two wind turbine rotor blade 5a, 5b, a part of the tower 2, a part of the nacelle 3 and the hub 4 in a perspective view. The image is taken when the rotor blade 5a is in a horizontal position. This means that the rotor blade 5a is positioned at an azimuth angle of approximately 270°. In this case the centre line of the rotor blade 5a is perpendicular to the centre line of the wind turbine tower 2.

Figure 5 schematically shows a section of the image of Figure 4. In Figure 5 three measuring points 30, 31 and 32 are marked. The first measuring point 30 is located at the suction side 23 close to the shoulder 14. The second measuring point 32 is located at the trailing edge, preferably at the suction side of the trailing edge 11 close to the shoulder 14. The third measuring point 32 is located at the pressure side 25 close to the shoulder 14. The distance between the second measuring point 31 at the trailing edge 11 and the third measuring point 32 at the suction side 25 is designated by an arrow 22. The distance between the third measuring point 32 at the pressure side 25 and the first measuring point 30 at the suction side 23 is designated by an arrow 21.

The principle of the blade angle estimation are determining the position of the trailing edge of the blade relative to the pressure side and the suction side of the blade at shoulder position, and using the geometry of the blade shoulder section to determine the angle for the same relative position of the trailing edge. These two operations have been coded into a program in order to make the process easier to carry out.

With focus on the blade shoulder, the method used in the present embodiment for pitch angle measurement is based on estimation of the position of the blade suction side, the position of the trailing edge at the blade suction side and the position of the blade pressure side. These positions are used for calculating the ratio between the distance from the blade pressure side to the suction side of the trailing edge, and the distance from the blade pressure side to the blade suction side.

Using the cross section data of the blade, it is determined which angle the blade should be viewed from in order to reach this ratio.

The program can make the following features available: interactive centering of the blade shoulder (the viewed section of the image is changed by shifting controlled by mouse clicks) and/or interactive image rotation and/or new images are shown with the last setting of shift and rotation and/or auto-detection of edges in the proximity of the mouse click and/or plot of blade profile, and of the profile rotated according to the mouse clicks and/or output of list of estimated angles; the user has the choice of outputting the auto-detected positions or the actual mouse positions.

The blade pitch angle estimation is achieved by determining the position of the trailing edge 11 of the blade 5 relative to the pressure side 25 (distance 22) and the suction side 23 of the blade 5 at shoulder position 14, and using the geometry of the blade shoulder section 14 to determine the pitch angle for the same relative position of the trailing edge 11. These two operations can be coded into an analysing program in order to make the process easier to carry out.

In an analysing program the following features can be available: interactive centering of the blade shoulder (the viewed section of the image is changed by shifting controlled by mouse clicks) and/or interactive image rotation and/or new images are shown with the last setting of shift and rotation and/or auto-detection of edges in the proximity of the mouse click in equal horizontal (in the images) positions and/or plot of blade profile, and of the profile rotated according to the mouse clicks and/or output of list of estimated angles; the user has the choice of outputting the auto-detected positions or the actual mouse positions. Additionally, the trailing edge pressure side may be selected for the pitch angle calculation. Moreover, the image can be shifted at small steps up & down as well as left & right and/or a distance measurement in pixels may be possible.

The interactive program is used for estimation of the angle at which the blade shoulder is viewed. This angle may have to be compensated for rotor tilt angle and/or camera position and/or pitch angle set-point and/or step pitch and/or 3D phenomena. The 3D angle compensation is assumed to be small, and hence it can be neglected.

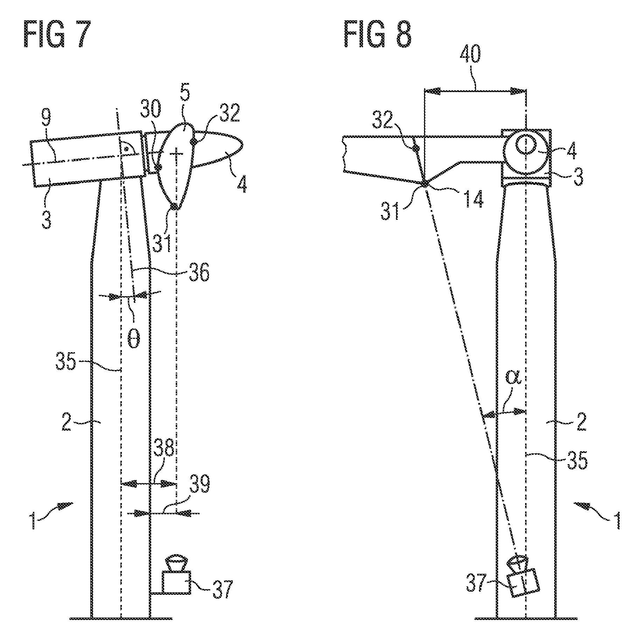

The estimated angle may be compensated for the tilt angle $\theta$ (see figure 7) of the rotor. As the estimated angle is increasing with increasing angle of attack, the tilt angle has to be subtracted from the estimated angle. Defining the camera position angle $\alpha$ (see figure 8) as positive downwind from the hub 4, and negative upwind from the hub 4, the angle is to be subtracted from the estimated angle.

In the measurements can be performed by a camera 37 at a distance 39 from the tower of 1.6 meter. With a tower diameter of 4.5 m the distance from tower centre 35 to the camera 37 is 3.85 m.

The horizontal distance from tower centre 35 to hub centre is determined to be 4.5 m. Hence, the distance from the hub 4 to the camera 37 position is 0.65 m (downwind from the hub). The corresponding angle is atan(0.65 m/ (hub height = 80 m)) = 0.47°. The total compensation for tilt and camera position is - 6.5°.

Figure 6 schematically shows the pitch angle confidence intervals for three different rotor blades of a wind turbine. The pitch angle confidence interval of the first rotor blade is designated by reference numeral 33, the pitch angle confidence interval of the second rotor blade is designated by reference numeral 34 and the pitch angle confidence interval of the third rotor blade is designated by reference numeral 35. The pitch angle confidence intervals are given in degree.

The area of interest is the blade shoulder 14. The transition between hub 4 and blade root 13 is used for verifying that the rotor is in the desired angle. Based on images of the type shown in figure 4 and 5, the pitch angle is estimated by use of an interactive program. The functions of the program are: showing the image and move the focus area to the images shoulder and making the image clickable in order for the user to point out 3 points by the blade shoulder: a) suction side, b) trailing edge (suction side), and c) pressure side. Based on the 3 points the ratio between the blade thickness by the shoulder and the distance from the trailing edge (suction side) to the pressure side is calculated. Based on the ratio above and the blade profile data for the shoulder the angle from which the blade is photographed is calculated.

In the described method, the distances can be based on one dimensional data (1-dim) or on two dimensional data (2-dim). The difference between 1-dim data and 2-dim data are, that in case of 1-dim data distances are based on y-coordinates only (good if the blade is completely horizontal in the image) and in case of 2-dim data distances are based on vector distances (good if the blade is not completely horizontal in the image).

The calculation of the angle, from which the blade is being viewed in the image, is based on profile data for the blade type at the shoulder position. The angles determined by use of the interactive program have to the compensated for the position of the camera. If the camera was in the rotor plane (valid for zero flap-wise coning only), the true pitch angle would have been determined. However, the method is being developed for offshore application, and hence the position is chosen to be 1.25 m in front of the tower. Geometric calculations show that the angle is to be corrected by the tilt angle (of 6°) + 0.6° = 6.6°. This calculation is based on a 2D calculation. The horizontal distance from the tower centre 35 to the blade centre 18 is found to be 4.5 m. Subtracting the tower radius (2.25 m) and the distance from the tower to the camera 39 (1.25 m), the remaining distance is 1.0 m. This introduces an angle of atan(1.0m/(hub height = 90.0m)) = 0.6°.

The results are tentative regarding the calculation of the reference for the pitch angles, but the relation between pitch angles is valid assuming that all blades 5 have been at exactly 0.0° pitch at the times when the images were acquired.

The conclusion is that in figure 6 the first blade in seems to the correctly adjusted, whereas second and third blades are slightly offset at approx. -0.25° (negative angle means reduced angle of attack).

Figure 7 and Figure 8 schematically show the geometry of a pitch angle measurement at a wind turbine. While Figure 7 shows a view parallel to the plane of the rotor Figure 8 shows a view perpendicular to the plane of the rotor.

A camera 37 is detachable connected to the tower 2. The camera 37 is located close to the bottom. The camera 37 is further located below the hub 4 in exact upwind direction. The distance between the camera 37 and the tower 2 is designated by reference numeral 29. The distance between the camera 37 and a center line 35 of the tower 2 is designated by reference numeral 38. Preferably, the distance between the camera and the center line 35 of the tower 2 corresponds to the distance of the rotor blade 5 to the center line 35 of the tower 2.

The nacelle 3 is tilted by an angle T. This means, that an axis 36 which is perpendicular to the rotation axis 9 includes a tilt angle θ with the center line 35 of the tower 2. The measuring points 30, 31 and 32 are designated by dots. The distance between the center line 35 of the tower 2 to the blade shoulder 14 is designated by reference numeral 40. The view angle of the camera 37 relative to the center line 35 of the tower 2 is designated by α.

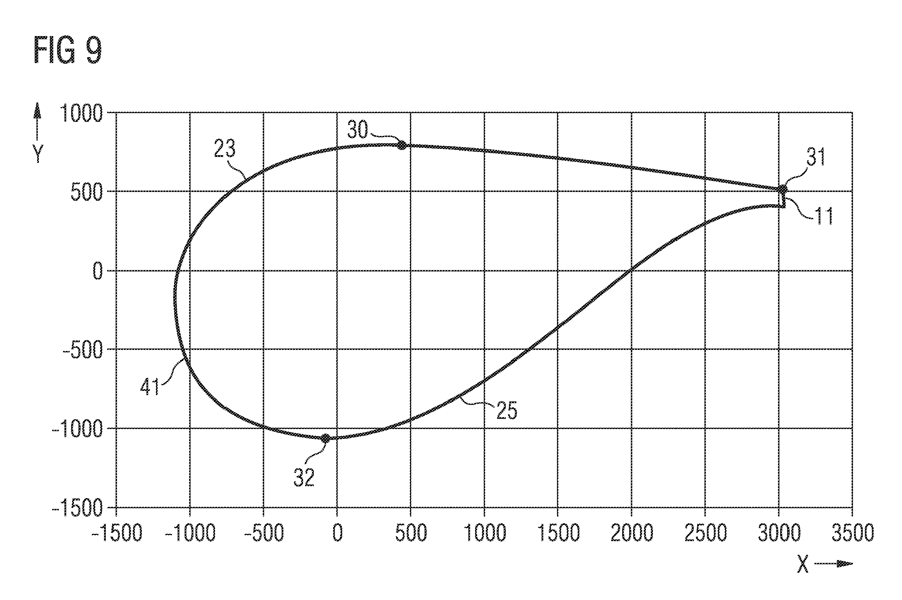

Figure 9 schematically shows a cross section of the rotor blade at the shoulder position rotated to a pitch angle of 0°. The x-axis and the y-axis show the pixel coordinates of the image. The suction side tangent corresponds to the first measuring point 30, the trailing edge suction side corresponds to the second measuring point 31 and the tangent at the pressure side corresponds to the third measuring point 32. The shoulder cross section rotated to a pitch angle of 0,0° is designated by reference numeral 41.

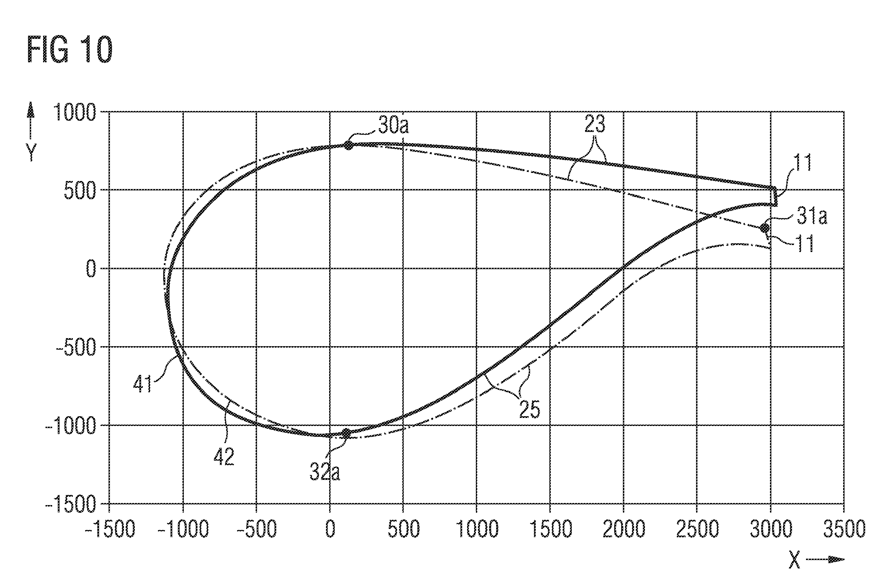

Figure 10 schematically shows the shoulder cross section 41 of Figure 9 and the shoulder cross section 42 which is rotated about an angle of -4,752° compared to the shoulder cross section 41 at 0,0°. The first measuring point at the suction side of the rotated profile is designated by reference numeral 30a, the second measuring point at the trailing edge of the rotated profile is designated by reference numeral 31a and the third measuring point at the pressure side of the rotated profile is designated by reference numeral 32a.

The blade in focus is rotated to the azimuth angle 270° (rotor stationary) and the pitch is set to 0.0°. The camera 37 is positioned vertically below the hub centre. This is illustrated in the figure 7 and 8.

The issues disturbing a clean view of the blade shoulder 14 are: The tilt angle rotates the blade (typically 6° for many turbines). Compensation will be implemented for the tilt angle in the software. The view at the shoulder from the position in front of the turbine tower implies that the view of the blade is not perpendicular to the blade axis. For example the rotor blade 5 may have the shoulder in 12 m. If the hub height is 90 m this introduces an angle of 8°. A compensation may be implemented for this. The flap-wise coning does not have significant impact on the measurement, as the camera position is beneath the hub centre, and hence, the coning does not rotate the shoulder cross section relative to the viewpoint.

The three measuring points 30, 31 and 32 in figure 5, 9 and 10 are the positions used to calculate the angle at which the blade is seen. The calculation of the angle of view is based on the ratio between y-coordinates of:

$$\text{Ratio}=\frac{trailing\_edge\_suction\_side(31) - \tan gent\_pressure\_side(32)}{\tan gent\_suction\_side(30) - \tan gent\_pressure\_side(32)}$$

The coordinates of the cross section of the blade shoulder may be coded into the interactive image analysis program. Approximately 100 coordinates are used in the definition of the cross section of the shoulder.

The program is calculating the angle of view in the following steps: Calculating the above ratio by use of the y-coordinate of the trailing edge suction side, the maximum y-coordinate (= suction side), and the minimum y-coordinate (= pressure side); making a small rotation (for instance 0.001°) of all profile coordinates by use of the standard coordinate rotation matrix; using the two ratios, and the small rotation angle, calculate d(ratio)/d(rotation angle). Knowing this difference quotient and knowing the ratio calculated for the blade in the given image, it is easy to do a rotation towards the correct angle. The above process can be repeated until the difference between the ratio found for the rotation angle, and the ratio for the blade in the image is sufficiently small (for instance 0.0001). In fact the program uses the Newton-Raphson iteration method in order to minimize the number of iterations.

For at certain image the pixel coordinates of the 3 points were:

| | | |
|---|---|---|
| point at the suction side (30) | 1319 | 1445 |
| point at the trailing edge (31) | 1323 | 1370 |
| point at the pressure side (32) | 1316 | 1166 |

Hence, the distance from pressure to suction side is 1445 - 1166 = 279 pixels. Likewise the distance from suction side by the trailing edge to the pressure side is 1370 - 1166 = 204 pixels. The ratio is then 204/279 = 0.7312.

Figure 9 shows the shoulder profile of a rotor blade in 0.0 deg pitch angle. Using the maximum y-coordinate, the minimum y-coordinate, and the y-coordinate of the trailing edge (suction side), the ratio is determined to be: 0.850001. After rotating about 0.001°, the ratio is 0.850026 and, hence, the difference quotient is (0.850026-0.850001)/0.001 = 0.025 deg[-1]. As the difference in ratio is 0.7312-0.850001 = -0.1188, the next rotation angle will be

$$-0.1188/0.025 = -4.752°. \qquad\qquad (1)$$

The blade orientation corresponding to the resulting pitch angle is shown in Figure 10.

The ratio for the profile rotation in Figure 10 is 0.723998. Rotating to -4.751° yields a ratio of 0.724026. Hence, the new difference quotient is 0.028 deg[-1] and the current difference between the ratios is 0.7312 - 0.723998 = -0.0072. Using this to calculate the next rotation angle yields:

$$-0.0072/0.028 = -0.257°. \qquad\qquad (2)$$

Adding up the angle (1) and (2) yields:

$$-4.752+0.257 = 4.495°.$$

The new ratio is 0.7311. The next iteration brings the angle to -4.490°, and the ratio to 0.7312, which is the desired ratio, and hence the correct angle is found. Note that the result above does not compensate for tilt and no 3D correction is included.

Considering the tilt angle of 6°(and ignoring the 3D correction), an angle of -4.49° corresponds to a pitch angle of 1.51°. In order for the program to be able to estimate the angle from which the blade is viewed, the user must click on the three key locations by use of the computer mouse. As computer screens and computer mice are very different in quality, the program has built-in assistance to determine the exact location of the edges of the blade in the proximity of each mouse click.

A blade can be analyzed by marking the suction side tangent, the pressure side tangent and the trailing edge suction side in a graphical user interface (GUI) of the program, e.g. by three clicks at the image of the shoulder. Note that the sign of the program output is to be changed in order to correspond to the pitch angle sign convention of the turbine controller. The result is that the blade is viewed from an angle of 6.063°. This is based on secondary markings which have been automatically positioned at the same x-coordinates and at the most significant edge in the proximity of the mouse clicks. The corresponding result based on points, where the mouse has actually been clicked, is 5.989°. The precision of the method is approximately +/- 0.1°. Note that the program behind the GUI is not compensated for tilt angle yet; hence, the pitch angle is very close to 0.0°.

The edge detection used for automatic correction of the edge positions is simple. It is based on calculating the standard deviation of light intensity in the green channel pixels in a small area about the center pixel (for instance all pixels within a distance from the center pixel of less than the square root of {3*3+1}). The highest standard deviation within a small area about the mouse click (for instance +/- 5 pixels in both directions) is determined and may be marked up for the user with a cross.

## Claims

1. A method for measuring the pitch angle of a wind turbine rotor blade (5),
   **characterised in that**
   at least one image of at least part of the rotor blade (5) is acquired by a camera (37) from a defined position and the pitch angle is calculated by means of data from the at least one image.

2. The method as claimed in claim 1,
   **characterised in that**
   the image is acquired when the rotor blade (5) is mounted onto the wind turbine (1) and when the rotor rotates or when the rotor is stopped.

3. The method as claimed in claim 1 or 2,
   **characterised in that**
   the wind turbine (1) comprises a tower (2) and the image is acquired by a camera (37) which is positioned at a horizontal distance (44) between 1 m and 3 m from the tower.

4. The method as claimed in any of the claims 1 to 3, **characterised in that**
   the wind turbine (1) comprises a hub (4) and the image is acquired by a camera (37) which is positioned vertical below the hub (4) and/or in upwind direction.

5. The method as claimed in any of the claims 1 to 4, **characterised in that**
   the image of the rotor blade (5) is analysed by an image analysing program, then the pitch angle of the rotor blade (5) is adjusted and, if necessary, at least one further image of the rotor blade (5) is acquired and analysed by the image analysing program.

6. The method as claimed in any of the claims 1 to 5, **characterised in that**
   the image of the rotor blade (5) is acquired when the rotor blade (5) is in a horizontal position.

7. The method as claimed in any of the claims 1 to 6, **characterised in that**
   the rotor blade (5) comprises a blade root (13) and a trailing edge (11) with a shoulder (14) and the image is acquired from the shoulder (14) to the blade root (13).

8. The method as claimed in any of the claims 1 to 7, **characterised in that**
   the rotor blade (5) comprises a trailing edge (11) with a shoulder (14), a pressure side (25) and a suction side (23), and the pitch angle is calculated based on a determination of the position of the trailing edge (11) relative to the pressure side (25) and the suction side (23) at the position of the shoulder (14).

9. The method as claimed in any of the claims 1 to 8, **characterised in that**
the pitch angle is calculated using the geometry of the rotor blade (14).

10. The method as claimed in any of the claims 1 to 9, **characterised in that**
the rotor blade (5) is positioned in an azimuth angle between 267° and 273°, the rotor blade (5) is pitched to 0°, at least one image of the rotor blade is acquired from a defined position below the rotor (5) blade by a camera (37) and the pitch angle is calculated based on analysed data from the image.

11. The method as claimed in any of the claims 1 to 9, **characterised in that**
the rotor blade (5) is rotating, the rotor blade (5) is pitched to 0°, at least one image of the rotor blade is acquired from a defined position below the rotor blade (5) by a camera (37) and the pitch angle is calculated based on analysed data from the image.

12. A wind turbine (1) comprising a tower (2), a hub (4) and at least one rotor blade (5),
**characterised in that**
a camera (37) for acquiring images of the rotor blade (5) is connected to the tower (2) below the hub (4).

13. The wind turbine (1) as claimed in claim 12, **characterised in that**
the tower (2) comprises a foundation and the camera (37) is connected to the foundation.

14. The wind turbine (1) as claimed in claim 12 or 13, **characterised in that**
the camera (37) is detachable connected to the tower (2).

15. The wind turbine (1) as claimed in any of the claims 12 to 14,
**characterised in that**
the camera (37) is connected to an analysing unit which is configured for analysing images from the camera.

FIG 1

FIG 2

FIG 3

FIG 4

FIG 5

FIG 6

Pitch angle [deg]

Conf. intervals

FIG 7

FIG 8

FIG 9

EP 2 369 176 A1

FIG 10

Europäisches
Patentamt

European
Patent Office

Office européen
des brevets

## EUROPEAN SEARCH REPORT

Application Number

EP 10 15 4470

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/266160 A1 (JEFFREY MIKE [US] ET AL) 29 October 2009 (2009-10-29) | 1-11 | INV. F03D7/02 |
| Y | * paragraphs [0040] - [0071] * <br> * figures 1,3,4 * | 12-15 | |
| X | DE 10 2008 031484 A1 (ENERGY CONSULT PROJEKTGMBH [DE]) 14 January 2010 (2010-01-14) | 1-11 | |
| Y | * paragraphs [0016] - [0022] * <br> * figures 1-4 * | 12-15 | |
| A | DE 10 2008 013392 A1 (LUCKS CHRISTOPH [DE]) 17 September 2009 (2009-09-17) * paragraphs [0013] - [0023] * * figures 3,4 * | 1-15 | |
| A | DE 100 32 314 C1 (WOBBEN ALOYS [DE]) 13 December 2001 (2001-12-13) * claims 1-10 * * figures 1,4 * | 1-15 | |
| A | GB 2 211 603 A (STEWART HUGHES LTD [GB]) 5 July 1989 (1989-07-05) * page 1, line 1 - page 5, line 5 * * figures 1,4 * * figures 1-11 * | 1-15 | TECHNICAL FIELDS SEARCHED (IPC) <br> F03D <br> G01B |
| A | FR 2 882 404 A1 (ELECTRICITE DE FRANCE [FR]) 25 August 2006 (2006-08-25) * page 1, line 1 - page 4, line 16 * * figures 1-17 * | 1-15 | |

The present search report has been drawn up for all claims

| Place of search | Date of completion of the search | Examiner |
|---|---|---|
| The Hague | 21 July 2010 | Gebker, Ulrich |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 10 15 4470

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2010

| Patent document cited in search report | | Publication date | Patent family member(s) | | Publication date |
|---|---|---|---|---|---|
| US 2009266160 | A1 | 29-10-2009 | WO 2009129617 | A1 | 29-10-2009 |
| DE 102008031484 | A1 | 14-01-2010 | NONE | | |
| DE 102008013392 | A1 | 17-09-2009 | NONE | | |
| DE 10032314 | C1 | 13-12-2001 | AT 376622 | T | 15-11-2007 |
| | | | AU 6226401 | A | 14-01-2002 |
| | | | AU 2001262264 | B2 | 13-01-2005 |
| | | | BR 0112171 | A | 06-05-2003 |
| | | | CA 2414645 | A1 | 30-12-2002 |
| | | | DK 1301707 | T3 | 28-01-2008 |
| | | | WO 0202936 | A1 | 10-01-2002 |
| | | | EP 1301707 | A1 | 16-04-2003 |
| | | | ES 2293995 | T3 | 01-04-2008 |
| | | | JP 4070595 | B2 | 02-04-2008 |
| | | | JP 2004502091 | T | 22-01-2004 |
| | | | PT 1301707 | E | 08-11-2007 |
| | | | US 2004013524 | A1 | 22-01-2004 |
| GB 2211603 | A | 05-07-1989 | NONE | | |
| FR 2882404 | A1 | 25-08-2006 | NONE | | |

EPO FORM P0459

For more details about this annex : see Official Journal of the European Patent Office, No. 12/82